# EUROPEAN PATENT SPECIFICATION

(11) **EP 0 488 673 B1**
(45) Date of publication and mention of the grant of the patent: **10.09.1997**
(21) Application number: 91310918.7
(22) Date of filing: 27.11.1991
(51) Int. Cl.: H04H 7/00, H04N 5/268, H04Q 3/52

(54) **Matrix switcher apparatus**
Schaltmatrixgerät
Appareil à matrice de commutation

(30) Priority: 30.11.1990 JP 329622/90; 30.11.1990 JP 335573/90; 30.11.1990 JP 335574/90; 30.11.1990 JP 335575/90
(43) Date of publication of application: 03.06.1992
(73) Proprietor: SONY CORPORATION, Tokyo 141 (JP)
(72) Inventor: Mita, Michio, c/o Patents Div., Shinagawa-ku Tokyo 141 (JP); Sato, Kimiyasu, Shinagawa-ku Tokyo (JP); Nishimoto, Hidetoshi, Shinagawa-ku Tokyo (JP)
(74) Representative: Pilch, Adam John Michael

(56) References cited:
- EP-A- 0 016 397
- EP-A- 0 251 868
- US-A- 3 470 533

## Description

This invention relates to matrix switcher apparatus such as that capable of selectively outputting information signals supplied to a plurality of input terminals at desired output terminals.

In broadcasting stations or production studios producing television broadcast programmes (video-softs), video and audio signals inputted to and outputted from a plurality of devices, such as video tape recorders (VTRs), video disc recording and/or reproducing apparatus, audio tape recorders, audio disc recording and/or reproducing apparatus, microphones or television cameras need to be switchingly selectable in a desired manner for transmission. For example, a matrix switcher apparatus comprised of a matrix array of a large number of switches may be provided between a plurality of editing rooms and a VTR chamber in which a large number of VTRs and a variety of recording/reproducing apparatus are densely installed, with the aim of realising a connection state in which, on optionally selecting and controlling desired switches of the matrix switcher apparatus, a desired device or a device at that time out of use may be designated for use by a given editing chamber from a large number of the devices in the VTR chamber.

With such a matrix switcher apparatus, the required matrix size may be variable depending on the overall system size determined by, for example, the number of the devices to be in use or the number of the editing chambers, while there are cases in which a large size system with an input and an output each comprised of more than tens of channels is required. It is however difficult for a single matrix switcher apparatus to cope with these variable requirements. In this respect, it has been envisaged to construct an optional or large size matrix switcher apparatus by using a plurality of small to medium size matrix switcher units each comprised of several to tens of channels, as proposed in European patent application No. 91302745.4 (EP-A-0 451 999) filed on 28 March 1991 by the applicants and published on 16.10.91.

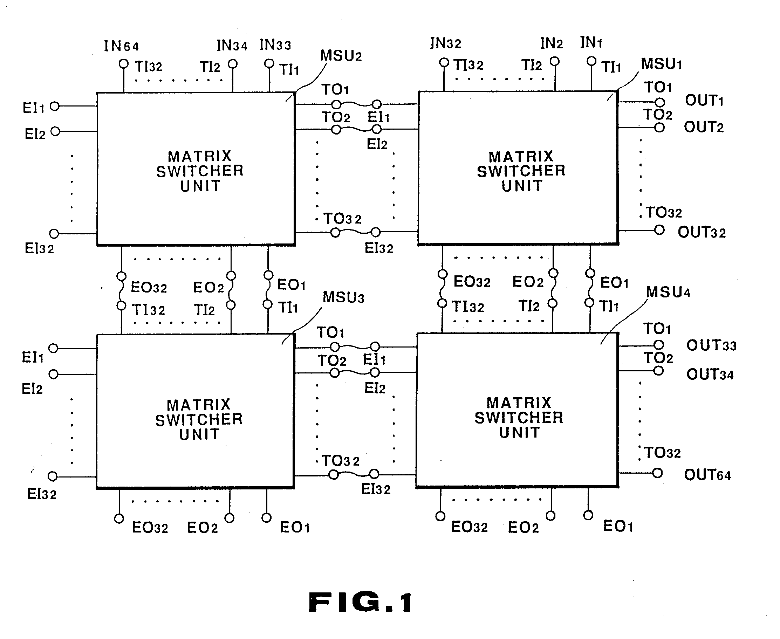

Figure 1 of the accompanying drawings shows an example of a matrix switcher apparatus made up of a plurality (four as illustrated) of the above-mentioned matrix switcher units MSU in order to increase the number of input and output terminals.

Each of the four matrix switcher units MSU₁ to MSU₄ shown in Figure 1 has 32 channel input terminals TI₁ to TI₃₂ and 32 channel output terminals TO₁ to TO₃₂ as well as switches (not shown) arranged at crosspoints or points of intersection between extension lines of these input terminals TI₁ to TI₃₂ and extension lines of the output terminals TO₁ to TO₃₂, thereby providing a 32 x 32 switch matrix. Each of the matrix switcher units MSU₁ to MSU₄ has 32-channel extension output terminals EO₁ to EO₃₂ and 32 channel extension input terminals EI₁ to EI₃₂. Using these four matrix switcher units MSU₁ to MSU₄, the extension input terminals EI₁ to EI₃₂ of the matrix switcher unit MSU₁ are connected to the output terminals TO₁ to TO₃₂ of the matrix switcher unit MSU₂, the extension output terminals EO₁ to EO₃₂ of the matrix switcher unit MSU₁ are connected to the input terminals TI₁ to TI₃₂ of the matrix switcher unit MSU₄, the extension output terminals EO₁ to EO₃₂ of the matrix switcher unit MSU₂ are connected to the input terminals TI₁ to TI₃₂ of the matrix switcher unit MSU₃ and the extension output terminals TO₁ to TO₃₂ of the matrix switcher unit MSU₃ are connected to the input terminals TI₁ to TI₃₂ of the matrix switcher unit MSU₄, thereby providing a matrix switcher apparatus having 64 channel inputs x 64 channel outputs. In this case, it is arranged that 32 of the 64 channel inputs, namely the inputs IN₁ to IN₃₂, are supplied respectively to the input terminals TI₁ to TI₃₂ of the matrix switcher unit MSU₁ and the remaining 32 channel inputs IN₃₃ to IN₆₄ are supplied respectively to the input terminals TI₁ to TI₃₂ of the matrix switcher unit MSU₂, while 32 of the 64 outputs, namely the outputs OUT₁ to OUT₃₂, are provided by the respective output terminals TO₁ to TO₃₂ of the matrix switcher unit MSU₁ and the remaining 32 channel outputs OUT₃₃ to OUT₆₄ are provided by the output terminals TO₁ to TO₃₂ of the matrix switcher unit MSU₄. It is possible in this manner to distribute the 64 channel inputs IN₁ to IN₆₄ so as to be provided as 64 channel outputs OUT₁ to OUT₆₄,

In a matrix switcher apparatus, a remote control unit is generally provided for making or breaking respective crosspoint switches, and desired input and output signal routing (route switching) may be realised by actuating buttons or changeover levers on a control panel of the remote control unit. In the matrix switcher apparatus having a plurality of the matrix switcher units, a corresponding plurality of the above-described remote control units may be provided, in which case it becomes necessary to provide a signal configuration, that is a protocol or format, for exchanging control signals or the like between the matrix switcher units and the remote control units.

If between several and less than a score of devices are to be used, a single serial busline will suffice for exchanging the control signals or the like. However, if signal transmission should be made over a serial busline between tens to hundreds of the devices, response performance or reliability may be lowered and an excessively long waiting time may elapse until actual signal route switching is achieved as a result of requested switching, or a special cable may need to be used because of the increased data error rate. If different communication functions of the units need to be provided, it is necessary to provide units performing these different communication functions by a painstaking and laborious operation.

If the above-described matrix switcher apparatus is applied to, for example, an apparatus capable of dealing with digital signals such as serial digital video signals, since such apparatus usually regenerates the input digital signals, it becomes necessary to switch the clock frequency depending on the format of the input digital signals. The clock signals are generated by a voltage-controlled oscillator (VCO) or the like. Supposing that a similar regenerating circuit is provided for waveforming at the back of each crosspoint switch of the matrix switcher apparatus, signals cannot be outputted in regular manner if the clock frequency at the input side differs from that at the output side.

In the above-described matrix switcher apparatus composed of a plurality of matrix switcher units, inspection of the switching states, that is, checking whether the switching operation of a large number of switches provided in a matrix configuration is being performed normally, is usually made by monitoring output signals from the respective channels. For this reason, should a signal not be outputted or transmitted due to defective switching operations of one of the switches of the matrix switcher apparatus, a check as to which of the switches is out of order can only be performed by an extremely time and labour-consuming operation.

It is to be noted that, in a system formed by interconnection of the above-described previously-proposed matrix switcher apparatus and remote control units, failure to make a response to transmitted data within a predetermined time is considered to be a sign of the occurrence of abnormalities such as busline breakage or shorting of the transmission line. However, it is not possible with the previously-proposed system to determine if the abnormalities are ascribable to shorting or to breakage.

According to one aspect of the invention there is provided matrix switcher apparatus comprising a plurality of switcher units connected in matrix form, each switcher unit including a plurality of input terminals and a plurality of output terminals, said apparatus comprising:
a plurality of controlling means each provided within each of said switcher units and operable to control the turning on and off of crosspoint switches connected to said input terminals and said output terminals;
a remote control unit for outputting switching data;
a serial busline for transmitting said switching data; and
a plurality of transmission/reception means each provided within said switcher units and said remote control unit for controlling transmission of said switching data between said switcher units and the remote control unit, a first one of said transmission/reception means being set to a master station mode and the remaining ones of said transmission/reception means being set to a slave station mode, said first one of said transmission/reception means sequentially polling the remaining ones of said transmission/reception means for storage of switching data outputted from said transmission/reception means for collectively transmitting the stored switching data over said serial busline, the remaining ones of said transmission/reception means receiving only relevant data from the switching data transmitted over said serial busline and transmitting the relevant data to said controlling means.

A preferred embodiment of this aspect of the invention provides a matrix switcher apparatus which is highly responsive in its input/output switching behaviour.

According to another aspect of the invention there is provided matrix switcher apparatus comprising a plurality of switcher units connected in matrix form, each switcher unit including a plurality of input terminals and a plurality of output terminals, said apparatus comprising a plurality of controlling means each provided within each switcher unit and operable to control the turning on and off of crosspoint switches connected to said input terminals and said output terminals, a remote control unit for outputting switching data, a serial busline for transmitting switching data, and a plurality of transmission/reception means provided in said switcher units and said remote control unit for controlling transmission of the switching data between said switcher units and said remote control unit, a first one of the transmission/reception means set to a master station mode sequentially polling the remaining transmission/reception means for storing the switching data outputted from each transmission/reception means for collectively transmitting the stored switching data over said serial busline, the remaining transmission/reception means receiving only relevant data from the data transmitted over the serial busline for supplying the received data to the controlling means, a plurality of input signal format detection means each provided in each of said switcher units, said input signal format detection means detecting signal formats of external devices each connected to each of said input terminals, a plurality of output signal format detection means each provided in each of said switcher units, said output signal format detection means detecting signal formats of external devices each connected to each of said output terminals, and discriminating means provided in each of said switcher units and operable to supply, on the basis of the results of detection by said input signal format detection means and the results of detection by said output signal format detection means, switching inhibit signals to said controlling means to prevent corresponding ones of said crosspoint switches from being turned on when said results of detection by said input signal format detection means differ from the results of detection by said output signal format detection means.

As a result of the preferred embodiment, mistaken operations may be prevented even when devices handling different format signals are connected to the input and output sides of the apparatus.

According to a further aspect of the invention there is provided matrix switcher apparatus comprising a plurality of switcher units connected in matrix form, each switcher unit including a plurality of input terminals and a plurality of output terminals, said apparatus comprising a plurality of controlling means each provided within each switcher unit and operable to control the turning on and off of crosspoint switches connected to said input terminals and said output terminals, a remote control unit for outputting switching data, a serial busline for transmitting switching data, a plurality of transmission/reception means provided in the switcher units and in the remote control unit and operable to control transmission of switching data between the switcher units and the remote control unit, a first one of said transmission/reception means set to a master station mode sequentially polling the remaining ones of said transmission/reception means set to a slave station mode for storing switching data outputted from said transmission/reception means for collectively outputting the stored switching data over said serial busline, said remaining ones of said transmission/reception means set to said slave station mode receiving only relevant data from the switching data transmitted over said serial busline for supplying the received data to said controlling means, level detection means for detecting the signal level of said serial busline, comparator means for comparing the signal level detected by said detection means and a reference level, and alarm means for issuing alarms, on the basis of the results of comparison by said comparator means, when said signal level differs from said reference level.

The preferred embodiment provides a matrix switcher apparatus capable of detecting abnormalities in circuitry or transmission lines and producing corresponding alarms.

The invention will now be described by way of example with reference to the accompanying drawings, throughout which like parts are referred to by like references, and in which:
Figure 1 is a schematic view of a previously-proposed matrix switcher apparatus;
Figure 2 is a block diagram showing a matrix switcher apparatus according to an embodiment of the present invention;
Figure 3 is a waveform diagram illustrating a communication data modulation system of the matrix switcher apparatus shown in Figure 2;
Figure 4 is a diagrammatic view of a communication data format of the matrix switcher apparatus shown in Figure 2;
Figure 5 is a diagrammatic view showing examples of commands for communication data of the matrix switcher apparatus shown in Figure 2;
Figure 6 is a block diagram illustrating the interconnection between primary and secondary stations of the matrix switcher apparatus shown in Figure 2;
Figure 7 is a block diagram of a matrix switcher apparatus according to a modified embodiment of the present invention;
Figure 8 is a flow chart showing the operation of a circuit for inhibiting mistaken connection of external devices in a matrix switcher apparatus embodying the present invention;
Figure 9 is a block diagram showing a self-diagnosis circuit of the matrix switcher apparatus according to an embodiment of the present invention; and
Figure 10 is a block diagram showing a modified embodiment of a self-diagnosis circuit of the matrix switcher apparatus.

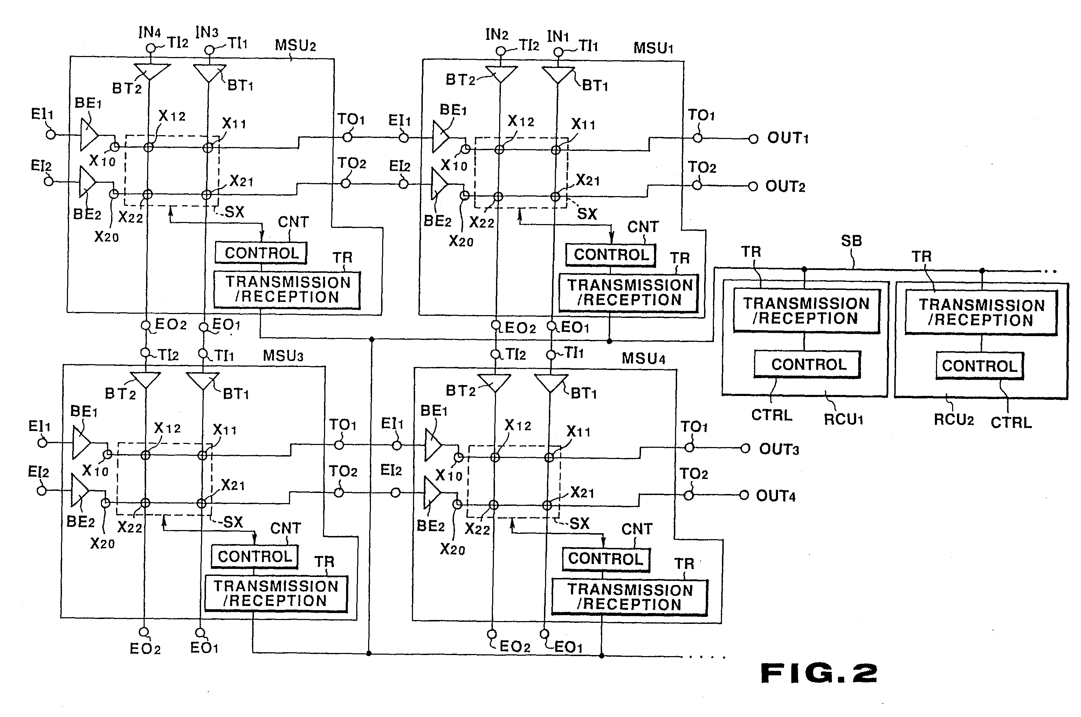

Referring to Figure 2, a matrix switcher unit MSU (any one of the units MSU₁ to MSU₄) for selectively distributing inputs at m-channel input terminals TI₁ to TIₘ to n-channel output terminals TO₁ to TOₙ, where m and n are integers not less than 2 and are each shown as equal to 2, includes at least a switch matrix SX composed of crosspoint switches X₁₁ to Xₙₘ, provided at the m x n crosspoints (herein four switches X₁₁ to X₂₂), a control circuit CNT for on/off control of the switches X₁₁ to Xₙₘ of the switch matrix SX, and a transmission/reception circuit TR for packeting data such as data relevant to the control operation of the control circuit CNT or status data including the status of the switch matrix SX into communication data for transmission or reception over an external serial busline SB. The matrix switcher unit MSU also includes a number m of buffers BT₁ to BTₘ provided between the input terminals TI₁ to TIₘ and a number m of the switches X₁₁ to X₁ₘ on the input side of the switch matrix SX (herein two buffers BT₁ and BT₂, and two switches X₁₁ and X₁₂), extension output terminals EO₁ to EOₘ connected to the output terminals of the buffers BT₁ and BTₘ (herein two terminals EO₁ and EO₂), a number n of extension input terminals EI₁ to EIₙ (herein two terminals EI₁ and EI₂), buffers BE₁ to BEₙ respectively connected to these extension input terminals EI₁ to EIₙ (herein buffers BE₁ and BE₂), and switches X₁₀ to Xₙ₀ provided at the respective crosspoints between the buffers BE₁ to BEₙ and the output terminals TO₁ to TOₙ (herein switches X₁₀ and X₂₀).

Using a plurality of the above-described matrix switcher units, such as the illustrated four matrix switcher units MSU₁ to MSU₄, the output terminals of one of the units may be connected to the extension input terminals of another unit, and the extension output terminals of the first-mentioned unit to the input terminals of still another unit, thereby increasing the number of input and/or output channels and hence the system size.

In the embodiment shown in Figure 2, a 4-channel input 4-channel output matrix switcher apparatus is provided by connecting the extension input terminals EI₁ and EI₂ of the matrix switcher unit MSU₁ to the output terminals TO₁ and TO₂ of the matrix switcher unit MSU₂, connecting the extension output terminals EO₁ and EO₂ of the matrix switcher unit MSU₁ to the input terminals TI₁ and TI₂ of the matrix switcher unit MSU₄, connecting the extension output terminals EO₁ and EO₂ of the matrix switcher unit MSU₂ to the input terminals TI₁ and TI₂ of the matrix switcher unit MSU₃, and by connecting the extension input terminals EI₁ and EI₂ of the matrix switcher unit MSU₄ to the output terminals TO₁ and TO₂ of the matrix switcher unit MSU₃. On the other hand, two of four channel inputs, namely the two channel inputs IN₁ and IN₂ are supplied to the input terminals TI₁ and TI₂ of the matrix switcher unit MSU₁ and the remaining two channel inputs IN₃ and IN₄ are supplied to the input terminals TI₁ and TI₂ of the matrix switcher unit MSU₂, while two or four channel outputs, namely the two channel outputs OUT₁ and OUT₂, are provided by the output terminals TO₁ and TO₂ of the matrix switcher unit MSU₁ and the remaining two channel outputs OUT₃ and OUT₄ are provided by the output terminals TO₁ and TO₂ of the matrix switcher unit MSU₄.

At least one remote control unit RCU is provided for remote control of these matrix switcher units MSU. In the present embodiment shown in Figure 2, two remote control units RCU₁ and RCU₂ are provided. Each remote control unit RCU is made up of a control circuit CTRL and a transmission/reception circuit TR. The transmission/reception circuit TR functions to transmit and receive data to and from the serial busline SB, while the control circuit CTRL functions to perform control operations for operating inputs from operating buttons provided on a panel of the remote control unit RCU or data display outputs to a display unit in association with data exchanged by means of the transmission/reception circuit TR.

The data transfer format or communication protocol by means of the serial busline SB will now be explained. A network belonging to a local area network (LAN) is employed, which allows for efficient operation even with a low level performance of, for example, a transmission distance of 500 m and a data rate of 307 kbps. The network has a bus construction and has its transmission line constituted by a coaxial cable. The transmission/reception circuits TR of the above-described matrix switcher units and of the remote control units are connected as terminals to the transmission line which is utilised on a time divisional basis.

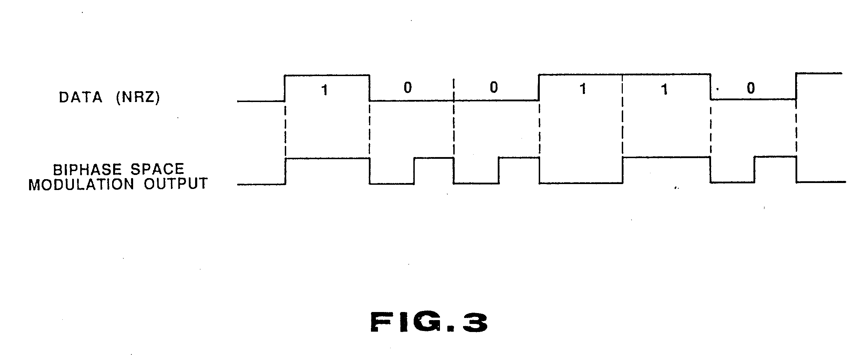

The modulation system is a so-called biphase space modulation system in which inversion or transition necessarily occurs at a boundary between data bits and at the centre of the data "0" bit, as shown in Figure 3. The electrical signal is 2V ± 0.5V (terminated by 75 ohms) and a 75 ohm connector of the T type BNC is used, with an input impedance being 57 ohms/27 kiloohms.

For data communication, the matrix switcher units MSU and the remote control units RCU, and in particular the transmission/reception circuits TR of these units as shown in Figure 2, are divided into primary and secondary (master and slave) stations or units. The primary station performs data link control and is fully responsible for error control and restoration on the link level, whilst the secondary station executes control contents of the data link under commands from the primary station. Only one of the units connected to the busline SB is the primary station, whilst the remaining stations are secondary stations. The primary station sequentially addresses the transmission/reception circuits TR of the units or stations to place a request for data transmission, stores communication data transmitted from those units which have data ready for transmission, and transmits the stored data collectively, whilst the transmission/reception circuits TR of the respective units only fetch those communication data which have been transmitted from the primary station and which have relevance to these units. In this manner, data communication over the busline SB is controlled unexceptionally by the primary station to improve the utilisation efficiency of the busline SB. Also, the primary station takes charge of putting into order or supervising the communication data inclusive of information data such as a switching demand from the remote control unit or results of switching sent from the matrix switcher unit without directly controlling the units in their entirety.

In the present embodiment, the matrix switcher units MSU and the remote control units RCU are each provided with a primary station/secondary station changeover switch which may be turned to the primary side or to the secondary side for converting the transmission/reception circuits TR of the units MSU or RCU into either the primary station or the secondary station. Among the units connected to the common busline SB, only one of the units should be switched or set to the primary station state and the remaining units are then switched or set to the secondary station state.

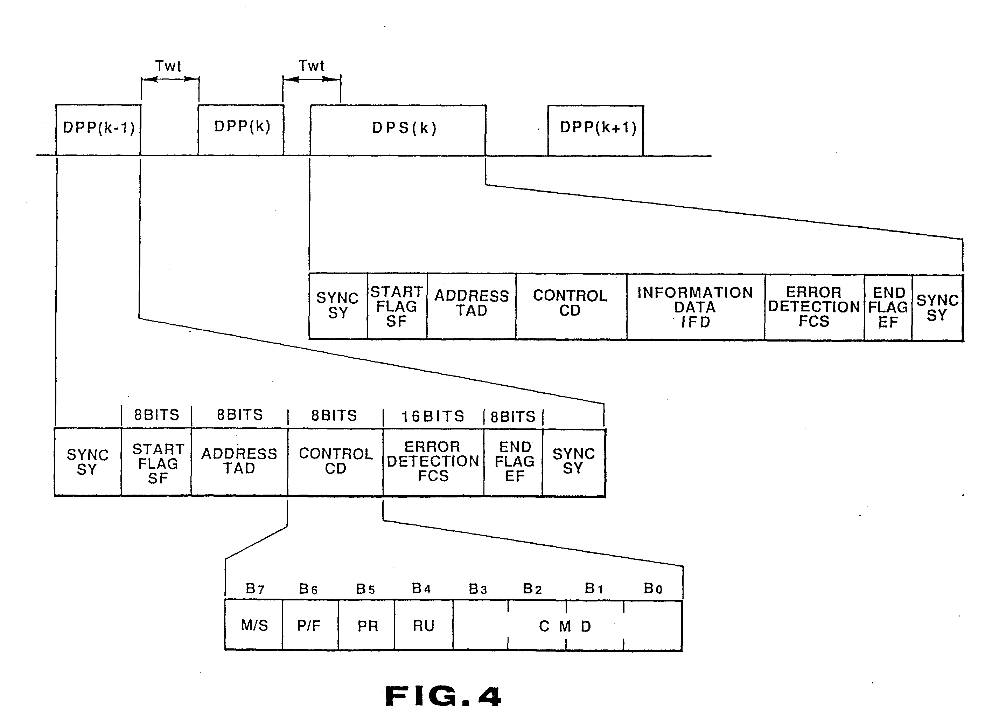

Figure 4 shows, as a practical example of a signal transmitted over the serial busline SB, a signal format for a case in which the totality of the units are sequentially designated from the primary station for inquiry to prompt data transmission by way of polling, and the designated unit has data in store for transmission.

It is to be noted that a series of addresses, that is unit addresses or station addresses, are assigned to the totality of the units, namely the matrix switcher units and the remote control units. As an example, the primary station may be set fixedly to an address 1, and addresses 2 et seq. are allotted to the secondary stations in such a manner that no stations in one data link bear the same address. Only the station bearing an address specified in an address of destination contained in the communication data receives the communication data. As specific addresses, an address 0 is a no-station address and an address bearing the maximum number, such as an address 255 in the case of an 8-bit address, is a global address. The no-station address is an address to which none of the stations respond and which may be used during network testing. The global address is an address to permit the data bearing the address to be received by all of the stations connected to the common busline SB.

Figure 4 shows a communication data packet DPP for a set of polling operations performed under the control of the primary station and a communication data packet DPS sent from the secondary station responsive to the polling. The packet herein means a unit block used in data communication. The polling operation is an operation designating a station address of a unit or station connected to the busline SB to prompt the unit to transmit its data while simultaneously authorising the unit to use the busline SB. In the absence of a reply during a predetermined waiting time T_{wt}, the station address is updated to proceed to the polling of the next station to designate sequentially all of the units connected to the busline for inquiry. In this case, polling to the primary station itself is performed in the primary unit (primary station) itself and the communication data packet DPP for polling the primary station is not sent over the busline SB.

In Figure 4, a communication data packet DPP(k) designates a packet or block in the case when a station corresponding to the address k is designated during polling. The unit (secondary station) bearing the address k has data in store for communication and the communication data packet DPS is sent over the busline SB within the waiting time T_{wt}. The transmission data packet DPP(k) for polling consists, from the leading end on, of a synchronising bit string SY, an 8-bit start flag SF, an 8-bit destination address of destination TAD, 8-bit control data CD, a 16-bit error detection code FCS, an 8-bit end flag EF and a synchronising bit string SY. The leading and trailing bit strings SY each consist of 10 to 16 bits. On the other hand, the communication data packet DPS from the secondary station (or packets containing information data in general) additionally has N-bit information data IFD between the control data CD and the error detection code FCS of the packet DPP. The N-bit information data IFD may consist of any desired number of 8-bit byte units. However, the maximum value of the data contained between the flags SF and EF within one packet or block is limited to, for example, 256 bytes, and a set of information data in excess of the limit value is divided into a plurality of blocks or packets for transmission.

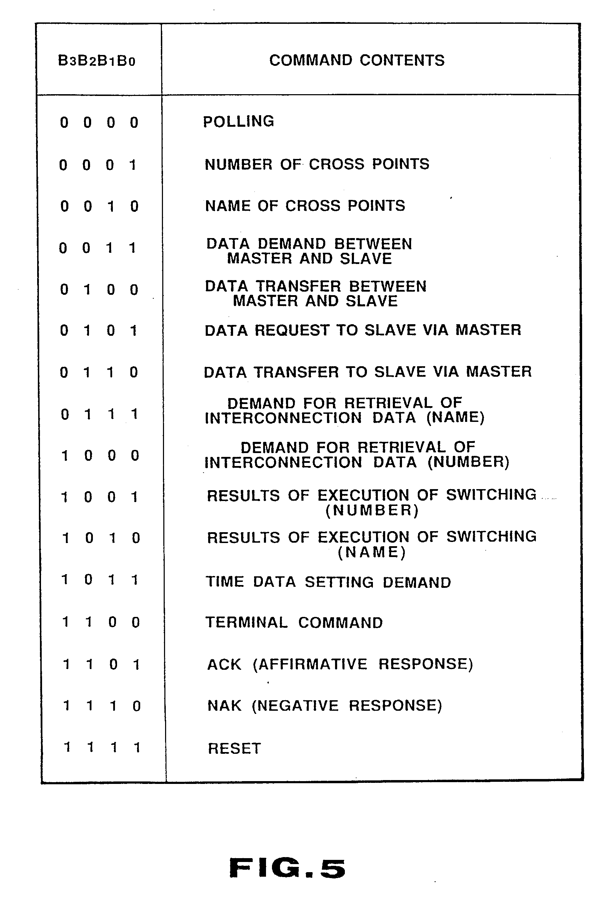

As a specific example of the contents of the control data CD, the most significant bit (MSB) B₇ is a master/slave discriminating bit M/S for discriminating whether the data is that from the primary station or that from a secondary station, and the second significant bit B₆ is a data continuity discriminating bit P/F for discriminating whether the block is the last of the blocks into which the above set of data has been divided. If the communication data is that from the primary station or from a secondary station, the M/S bit becomes "1" or "0", respectively. If the block is other than or is the last one of the blocks, the P/F bit becomes "1" or "0", respectively. The third significant bit B₅ is a protect demand discriminating bit PR and the fourth significant bit B₄ is a discriminating bit for discriminating whether the block is applied to the matrix switcher apparatus. The remaining four bits B₃ to B₀ are associated with commands CMD shown in Figure 5.

In Figure 5, the polling command corresponds to the four least significant bits of the control data CD of the communication data packet DPP at the time of polling and is outputted only by the primary station. The secondary station designated by the address of destination TAD acquires the right to use the serial busline SB. The designated secondary station has to respond within the above mentioned waiting time T_{wt} and, if the waiting time has expired, the primary station proceeds to the next polling. The crosspoint number and designation commands indicate that the next following data are the crosspoint number and designation. Data that may be exchanged at the time of data demand or data transfer between the primary and the secondary or to the secondary via primary consist of, for example, 8192 bytes and, if it is desired to transmit data in excess of the upper limit for one packet, such as 256 bytes, the data is divided into a plurality of sections for transmission. Data demand or data transmission between the secondary stations is effected by means of the primary station. There are also the following commands:- a prescribed interconnection data retrieval demand command (designation and number), a switching execution result command (designation and number), a time data setting demand command, a terminal command, an ACK (acknowledge) command, a NAK (not acknowledge) command and a reset command.

Turning again to Figure 4, the primary station sends out the communication data packet for polling DPP over the serial busline SB or data link. Since the M/S bit of the control data CD of the packet DPP is "1", only the station bearing the address designated by the address of destination TAD fetches data for execution. Supposing that a communication data packet DPP(k) having the address of destination of k is sent out and the secondary bearing the corresponding address of destination k contains information data for communication, such as demand or results of switching, the secondary bearing the address k sends out the communication data packet DPS(k) containing the information data over the busline SB during the time between the end of transmission of the packet DPP(k) and the expiration of the waiting time T_{wt}. In general, the M/S bit of the control data CD of the communication data packet DPS from the secondary station is "0" to permit only the primary station to fetch data while inhibiting data fetching directly by the secondary station. The primary station stores the fetched data in storage means such as random access memory (RAM) to hold it until the end of polling of all of the secondary stations. After the end of a series of the polling operations, the primary station packets the stored data for each station to transmit the resulting data packet. The M/S bit of the communication data packet is "1" at this time so that the data may be fetched by the station designated by the address of destination TAD. After transmission of all of the stored data, polling of the remaining units is started in a similar manner.

It will be seen from the above that data transmission between the units is always performed with the primary station as a counterpart of communication, and transmission or reception to or by a given station is performed at a rate of one packet at a time, so that the waiting time for transmission and reception may be reduced for any of the stations. That is, supposing that the duration of the communication data packet for polling DPP is 300 µs to 400 µs, and the waiting time T_{wt} is 100 µs to 200 µs, the time necessary for polling one station is about 500 µs, so that the polling time for 200 stations is 100 ms in the absence of transmission of communication data from the secondary station(s). Thus, in order to realise a response of, for example, 500 ms, it suffices to limit the information data communication time between the secondary stations and the primary station to 400 ms (200 ms if the data transmission is only in one direction). Thus, with the mean time duration for transmission of an information data communication packet of, for example, 5 ms, an information data transmission demand raised by about 40 stations simultaneously may be coped with. When the inquiry as to the presence or absence of the information data is made at a period of 500 ms, it occurs only rarely that as many as forty stations or units should have the data in store for transmission. The number of stations that can be coped with simultaneously may naturally be increased further by further increasing the response time beyond 500 ms.

The communication data transmitted from the respective units during the polling of all of the units is a mixture of various data, such as switching demand data, data showing the result of switching, inquiry data or response data, and data relevant to a given control operation, such as the demand, response or results of execution of the control operation, are transmitted with a data packet for each polling as a unit, so that the operation of other devices is not halted until termination of the control operation and any device is accessed once during a period of polling of all of the units. In this manner, the response performance and the utilisation efficiency of the busline may be improved in its entirety.

Since the totality of the secondary stations may become aware of the data collectively outputted from the primary station, the secondary stations may grasp the operations performed by the other secondary stations.

Since the primary station only stores and collectively transmits the communication data, the primary station may be simplified in structure and produced at reduced cost.

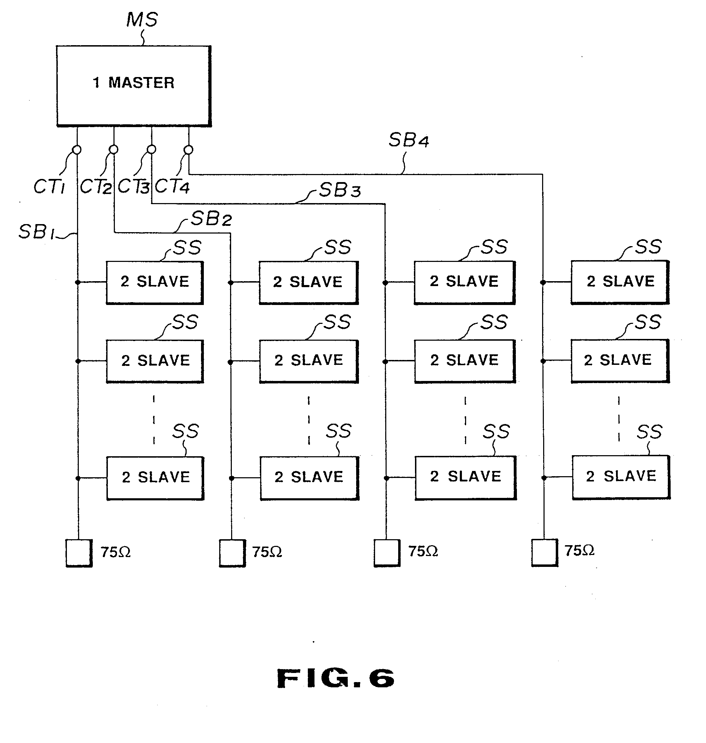

Figure 6 shows a practical example of interconnection between one primary station MS and a plurality of secondary stations SS. The primary station MS shown in Figure 6 is provided with four connector terminals CT₁ to CT₄ which may be connected to, for example, four connector terminals SB₁ to SB₄, Serial buslines SB₁ to SB₄ connected to these connector terminals CT₁ to CT₄ are of the same level without having any rank of priority such that a sole serial busline loop is constituted by the totality of the connector terminals. If the unit is intended for switching between the primary and secondary stations, only one of the connector terminals among a plurality of the connector terminals of the unit connected to the primary station may be utilised, while the remaining terminals may not be utilised.

The present invention is not limited to the above-described embodiments. For example, the present invention may also be applied to a system connected to units other than matrix switcher control units and remote control units, for example to data display units. The signal format is not limited to the embodiment of Figure 4, while the control data or the commands are also not limited to those shown above.

It will be seen from the foregoing that, with the matrix switcher apparatus embodying the present invention, the matrix switcher units and the remote control units provided with transmission/reception circuits for transmitting communication data over the serial busline are divided into a primary or master station and a plurality of remaining secondary or slave stations, with the primary or master station sequentially polling all of the units or stations connected to the serial busline for prompting data transmission and collectively outputting and transmitting the data from the units to the remaining units for putting communication data into order. In this manner, the number of units or stations may be increased without affecting the time of operation or execution, while data communication between the units may be conducted efficiently with improved response performance, and system construction may be simplified because the primary station need only put the data into order.

On the other hand, since the communication function of the units may be occasionally switched to the primary or secondary units, there is no necessity to provide previously the respective units with predetermined functions.

On the other hand, by dividing the transmission/reception circuits in the matrix switcher units and the remote control unit into a primary station for collectively outputting the communication data of the units and the remaining plural stations, and by providing, in each block or packet of communication data into which a series of communication data are divided for transmission over the serial busline, at least a primary/secondary discrimination bit and a discrimination bit for discriminating if the block is the last block, data communication between the units by means of the primary station may be improved in efficiency and a highly responsive switch controlling operation may be achieved even with a lower performance of the transmission lines.

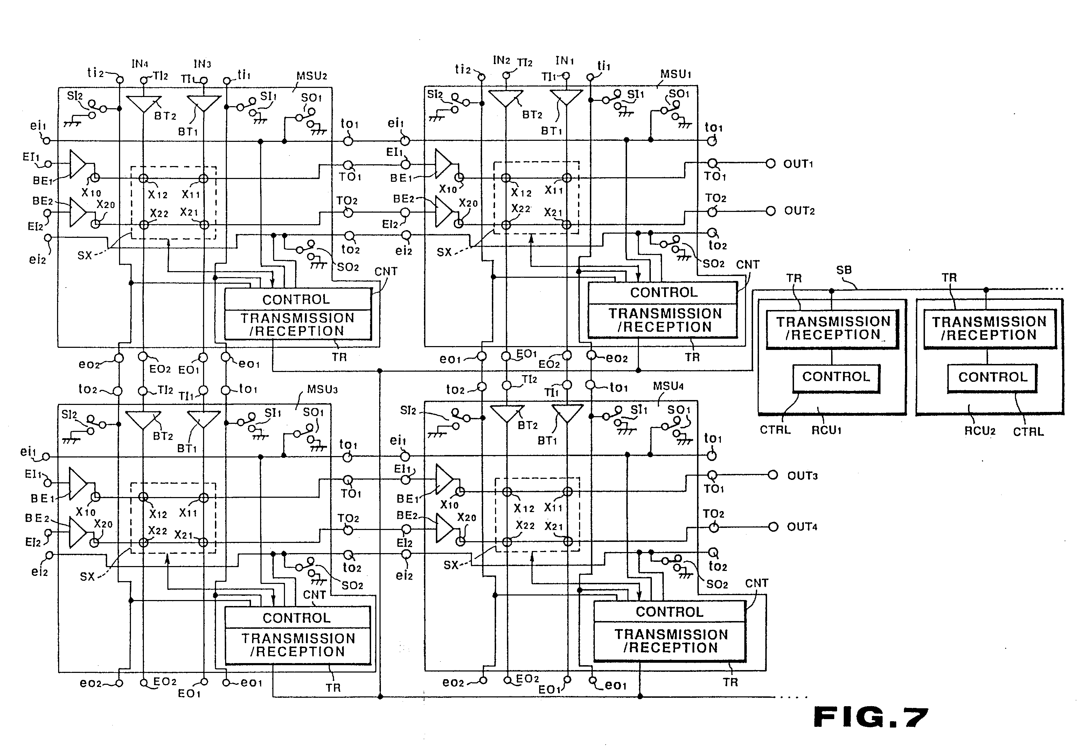

Referring now to Figure 7, a modified embodiment of the present invention will be described. The parts or components which are the same as those of the embodiment shown in Figure 2 are denoted by the same reference numerals and the corresponding description will be omitted for simplicity.

Each matrix switcher unit MSU in Figure 7 also includes input format changeover switches SI₁ to SIₘ (herein two input format changeover switches SI₁ and SI₂) switched in accordance with the signal format of input digital signals supplied to the input terminals TI₁ and TIₘ, and output format changeover switches SO₁ to SOₙ (herein output format changeover switches SO₁ and SO₂) switched in accordance with the signal format used in various devices connected to the downstream side of the output terminals TO₁ to TOₙ. One of fixed terminals of each of these input and output format changeover switches is grounded, while the other of the fixed terminals is designed as an open terminal. A common movable terminal of each of the input format changeover switches SI₁ and SI₂ is connected to format indicating signal input terminals ti₁ to tiₘ (herein two terminals ti₁ and ti₂), while a common movable terminal of each of the output format changeover switches SO₁ to SOₙ is connected to format indicating signal output terminals to₁ to toₙ (herein two terminals to₁ and to₂). The format indicating signal is normally at a high level and, when the input and output signals of the respective channels are of a first signal format or of a second signal format different from the first signal format, the format indicating signal goes to a high level or to a low level, respectively, thereby distinguishing the two formats of the input digital signals from each other. Level switching of the format indicating signal is achieved by switching of the format changeover switches SI₁, SI₂, SO₁ and SO₂. Alternatively, the format indicating signal may be a normally low signal, in which case each of the input and output format changeover switches has one of its fixed terminals connected to a high level voltage source and its other fixed contact arranged as an open contact. Although two signal formats are provided in the embodiment of Figure 7, a larger number of signal formats may also be coped with. In such a case, it may be contemplated to provide a multi-bit format indicating signal in association with a larger number of formats in place of performing switching at the format changeover switches. Still alternatively, the format changeover switch may be provided with a larger number of fixed terminals capable of assuming different levels in association with the different formats. A detection circuit for detecting the formats of input digital signals may be included in the apparatus of the present embodiment so that the input format changeover switches may be automatically switched in response to format detection signals from the format detection circuit.

The format indicating signals are supplied to the control circuit CNT which, if the signal format set at each channel input differs from that set at each channel output, outputs control data inhibiting connection of switches at the corresponding crosspoints in response to the format indicating signals supplied thereto. It is now assumed that, in Figure 7, the channel inputs IN₁ and IN₄ are switched to a serial digital signal of the first signal format, the channel inputs IN₂ and IN₃ are switched to the second signal format, the channel outputs OUT₁ and OUT₂ are switched to the second signal format and the channel outputs OUT₃ and OUT₄ are switched to the first signal format. In such a case, the signal formats at the switches X₁₁ and X₂₁ of the matrix switcher unit MSU₁, the switches X₁₂ and X₂₂ of the matrix switcher unit MSU₂, the crosspoint switches X₁₁ and X₂₁ of the matrix switcher unit MSU₃ and the switches X₁₂ and X₂₂ of the matrix switcher unit MSU₄ differ from one another. If the signals of the different signal formats are connected to one another, normal signals cannot be produced, that is, in the case of image signals, for example, regular images cannot be produced. For this reason, switching of the switches in this case is inhibited by the control circuit CNT.

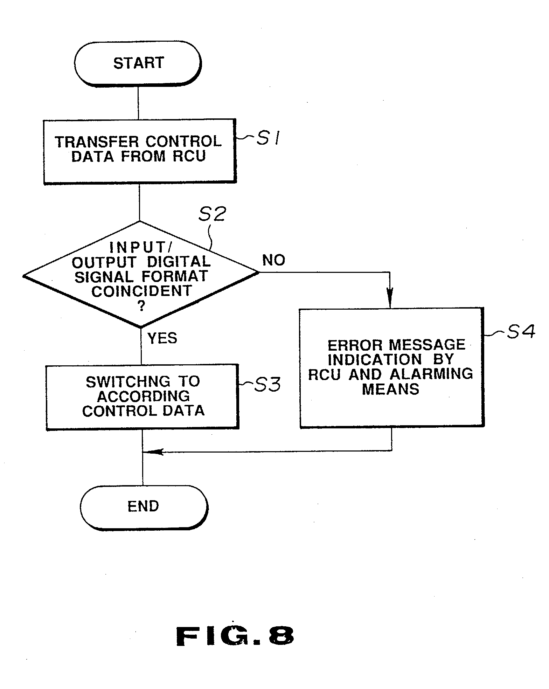

A signal flow chart for a switching inhibiting operation performed at the control circuit CNT is shown in Figure 8. Referring to this flow chart, control data for changeover control of the respective switches of the switch matrix SX are supplied at a step S1 from a remote control unit RCU, which will be explained later. At a step S2, it is checked, on the basis of the format indicating signals, if the format at the input coincides with that at the output. If the result at the step S2 is affirmative, that is if the input format coincides with the output format, control proceeds to a step S3. Switching operations of relevant switches of the switch matrix SX are performed at the step S3 in accordance with the control data. If the result of analysis at the step S2 is negative, that is if the input format differs from the output format, control proceeds to a step S4. At this step S4, switching of the relevant switches is inhibited, while data to the effect that switching has been inhibited is sent to the remote control unit RCU. Alarming means (not shown) for advising an operator of the occurrence of a mistaken input/output switching operation by light (inclusive of letter or character display or image) or sound is provided in the remote control unit. This alarming means displays an error indication or produces a characteristic sound such as buzzing for error indication depending on data indicating such mistaken switching.

Thus, in the present embodiment, if the input side format differs from the output side format, switching of the corresponding switch(es) is not performed to prevent the occurrence of mistaken input/output switching.

The input terminals ti₁ and ti₂ for format indicating signals are connected to corresponding extension output terminals eo₁ and eo₂ for format indicating signals, while output terminals to₁ and to₂ for format indicating signals are connected to corresponding extension input terminals ei₁ and ei₂ for format indicating signals.

Using a plurality of the above-described matrix switcher units, such as the illustrated four matrix switcher units MSU₁ to MSU₄, the output terminals of one of the units may be connected to the extension input terminals of another unit and the extension output terminals of the first-mentioned unit to the input terminals of still another unit for increasing the number of input and/or output channels and hence the system size.

With the above-described matrix switcher apparatus of this embodiment of the invention, if the signal format set at each of multichannel inputs differs from that set at each output, connection of corresponding switches within the matrix switcher unit is inhibited to prevent mistaken switching which might otherwise lead to the coupling of signals with different formats.

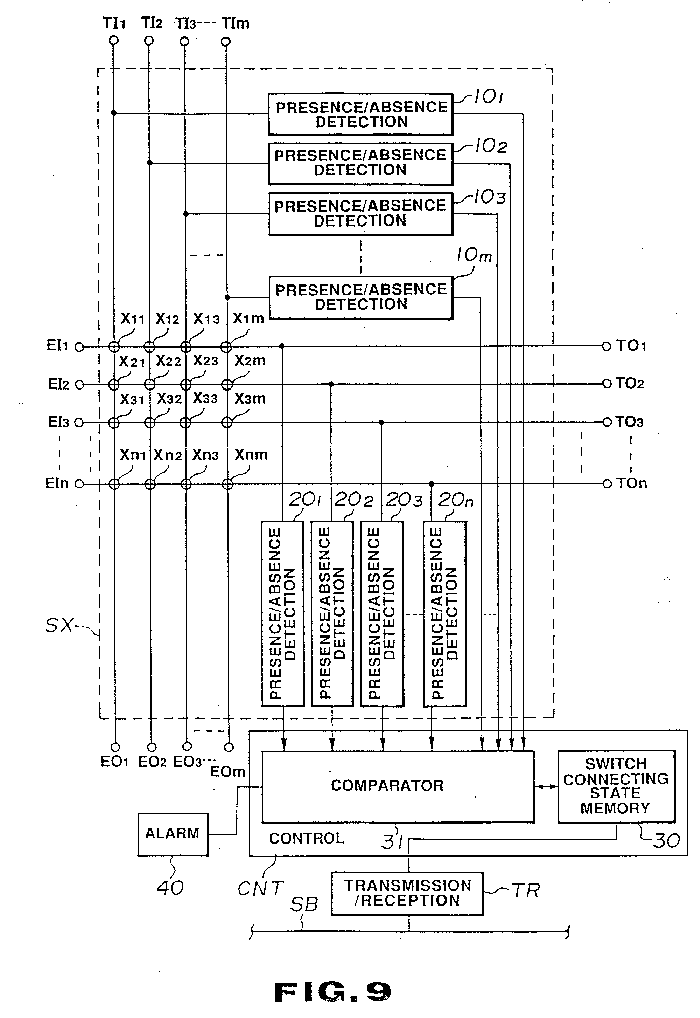

Referring to Figure 9, a self-diagnosis circuit for possible trouble shooting of the switch matrix SX of the matrix switcher apparatus shown in Figures 2 and 7 will be described. Although the switch matrix SX shown in Figures 2 and 7 is of the 2-input and 2-output type, explanation will be made for the general case of an m-input and n-output type switch matrix.

In Figure 9, a matrix switcher unit for distributing inputs at m channel input terminals TI₁ to TIₘ to n channel output terminals TO₁ to TOₙ in a desired manner includes at least a switch matrix SX composed of switches X₁₁ to Xₙₘ provided at m x n crosspoints, a control circuit CNT for on/off control of the switches X₁₁ to Xₙₘ of the switch matrix SX and a transmission/reception circuit TR for packeting data relevant to the control operation by the control circuit CNT and various data such as data concerning the status of the switch matrix into communication data for transmission or reception over an external serial busline SB. The present matrix switcher unit also includes a number m of extension output terminals EO₁ to EOₘ and a number n of extension input terminals EI₁ to EIₙ.

It is to be noted that the switch matrix SX is provided with presence/absence detection circuits 10₁ to 10ₘ and 20₁ to 20ₙ for determining the presence or absence of signals in each of the inputs at the input terminals TI₁ to TIₘ and in each of the output terminals TO₁ to TOₙ, and the control circuit CNT of the switch matrix SX deciphers the switching states of the switches X₁₁ to Xₙₘ of the switch matrix SX based on outputs from the presence/absence detection circuits 10₁ to 10ₘ and 20₁ to 20ₙ.

Referring to Figure 9, the control circuit CNT performs on/off control of the switches X₁₁ to Xₙₘ of the switch matrix SX based on control data transmitted from or received by the transmission/reception circuit TR over the external serial busline SB. The control data or the like transmitted to the control circuit CNT are stored transiently in a memory 30. Data indicating the switching states of the switches X₁₁ to Xₙₘ in the switch matrix SX are also stored in the memory 30. These data indicating the switching states are subsequently transmitted to the external serial busline SB via the transmission/reception circuit TR.

When the switches X₁₁ to Xₙₘ of the switch matrix SX are switchingly controlled in accordance with the control data, it may occur that switching abnormalities arise at one or more switches. That is, it may occur that, although these switching abnormalities occur in one or more switches, the data indicating the switching states of the switches X₁₁ to Xₙₘ are obtained as correct data corresponding to the aforementioned control data. Should such switching abnormalities arise, an output corresponding to an input cannot be obtained.

Thus, in the present embodiment, presence or absence of signals in the associated inputs and outputs is detected at the presence/absence detection circuits 10₁ to 10ₘ and 20₁ to 20ₙ for detecting the case in which, while signals should exist at both the input and the output, there exists a signal only at one or the other of the input and the output. That is, the presence/absence detection circuits 10₁ to 10ₘ and 20₁ to 20ₙ detect if signals exist at the respective inputs and outputs to output respective detection signals. As such detection signal, a signal format which will allow the signal presence or absence to be deciphered suffices. For example, signal presence or absence may be indicated by a logic value "1" or "0", respectively, or vice versa.

The detection signals are supplied to a comparator 31 of the control circuit CNT, to which the aforementioned control data stored in the memory 30 are also transmitted. In the comparator 31, the aforementioned control data, that is data indicating intrinsically correct switching states, are compared with the detection signals from the presence/absence detection circuits 10₁ to 10ₘ and 20₁ to 20ₙ. Should the control data differ from the corresponding detection signals at the corresponding input and output, a signal indicating the occurrence of a switching abnormality and a signal indicating which of the switches is in operational trouble are outputted. Similarly, should the control data be the same as the corresponding detection signal at the corresponding input and output, a signal indicating the normal switching state is outputted. In other words, the comparator 31 outputs a signal indicating a normal operating state when the detection signals from the input and the output designated by the control data both indicate "signal presence" or "signal absence", and outputs a signal indicating an abnormal operating state when one of the detections signals indicates "signal presence" and the other indicates "signal absence". These output signals are transiently stored in the memory 30 before being transmitted via the transmission/reception circuit TR to the external serial busline SB.

An alarming device 40 may be connected to the matrix switcher apparatus for informing the operator of the occurrence of the switching abnormalities by, for example, vision or sound, whenever such switching abnormalities have been detected by the comparator 31. In such a case, the switching abnormalities may be alerted promptly. As an example of visually informing the operator of the switching abnormalities at the alarming device 40, the abnormal state may be indicated by a red light emitting diode (LED) and the normal switching state may be indicated by a green LED.

With the above described matrix switcher apparatus of the present embodiment, signal presence or absence at the multichannel inputs and outputs of the matrix switcher unit may be detected by the presence/absence detection circuits 10₁ to 10ₘ and 20₁ to 20ₙ and the switching states at the input and the output are deciphered by the comparator 31 based on these detection signals to make possible self-diagnosis to enable the points of trouble or abnormalities in the switching states at the input and the output to be located easily. Therefore, if the matrix switcher apparatus comprises a plurality of matrix switcher units MSU, those units or switches which are in switching trouble may be located promptly to perform repair such as exchange of substrates as soon as possible. Although the data indicating the switching states at the respective switches are transmitted in the above embodiment to the control circuit CNT, the state of switching trouble may be detected with the present embodiment, even if data indicating these switching states are not available or if the data are not used or transmitted.

In this manner, with the matrix switcher apparatus of the present embodiment, by determining if there is or there is not a signal at each of plural inputs and at each of plural outputs of the matrix switcher units for assessing the switching states at the inputs and outputs, the switching states of the respective switches may be determined easily so as to locate the unusual input and output states. In this manner, defective units or switches may be located quickly even with a matrix switcher apparatus composed of plural matrix switcher units.

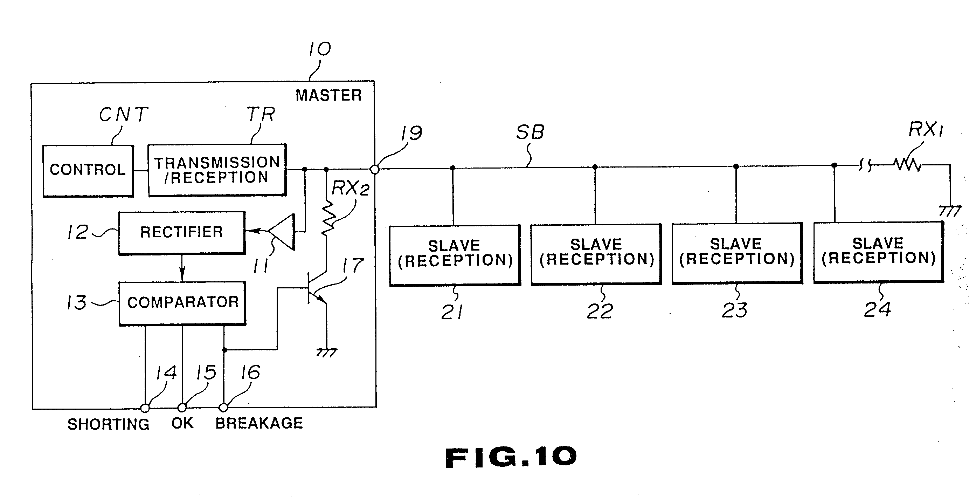

Referring to Figure 10, a self-diagnosis circuit for detecting possible shorting or breakage of a serial busline interconnecting the matrix switcher unit MSU and the remote control unit RCU will now be described. It is to be noted that each unit of the present matrix switcher apparatus includes a buffer 11 and a rectifier 12 as means for detecting the level of a predetermined signal in the transmission signal transmitted over the external serial busline SB. Details of the transmission signals will be given subsequently. The present matrix switcher apparatus also includes a comparator (window comparator) 13 as discriminating means for discriminating the occurrence of abnormalities on the transmission line between the secondary stations 21 to 24 and the primary station 10 over the external serial busline SB, such as breakage of the serial busline SB or shorting of the transmission lines. The present matrix switcher apparatus also includes a transistor 17 as a resistance inserting means for inserting a terminal resistor RX₂ on the transmission lines, in response to the output from the comparator 13, if the occurrence of the external serial busline SB has been found by the discriminating means. It is to be noted that, in Figure 10, a line extending from the transmission/reception circuit TR to a terminal 19 is assumed to be part of the external serial busline SB.

The above-mentioned predetermined signal in the transmission signal is a carrier, for example, transmitted for 1 msec once for 10 to 20 polling operations, as will be explained subsequently. The carrier is a burst signal which does not affect the control operation in each unit in any way, so that there is no risk of malfunction of the units caused by the carrier. For a transmission voltage of 5V, this transmission signal is of the order of 2V ± 0.5 with a terminal resistance of 75 ohms.

The buffer 11 is operated at a timing of transmission of the carrier to pass the carrier therethrough to the rectifier 12, where the carrier is rectified to detect the carrier level. The resulting level output is transmitted to the comparator 13.

A terminal resistor RX₁ having a resistance of 75 ohms as described above is connected to the terminal end of the external serial busline SB. Thus the usual voltage level of the carrier is 2V ± 0.5V. If the external serial busline SB should be broken between the secondary stations 23 and 24, for example, a state is reached in which the terminal resistor RX₁ has been eliminated. In this case, the voltage level of the transmission line on the external serial busline SB is equal to the transmission voltage or 5V. If shorting has occurred on one of the transmission lines, the voltage level of the transmission signal on the external serial busline SB is equal to the grounding voltage or 0V.

In this manner, by comparing the carrier voltage level transmitted from the rectifier 12 and the voltages 2V ± 0.5V,5V and 0V at the comparator 13, abnormalities on the transmission line may be detected in association with the respective voltage levels. If the carrier voltage level is less than 2V ± 0.5V, the transmission line is determined to be free of abnormalities. If the carrier voltage level is approximately 5V, line breakage is assumed to have occurred somewhere on the external serial busline SB. On the other hand, if the carrier voltage level is approximately OV, shorting is assumed to have occurred on one of the transmission lines. A corresponding signal for shorting is outputted via a terminal 14, while a corresponding signal for an abnormality-free state is outputted via a terminal 15 and a signal for line breakage is outputted via a terminal 16.

The function of the rectifier 12 and the comparator 13 in determining abnormalities may also be realised by a digital-to-analog converter by means of which an output from the buffer 11 may be converted into analog signals so that abnormalities may be determined in accordance with the level of the analog signals.

With the present apparatus, if it is found by the comparator 13 that the carrier voltage level is about 5V because of line breakage having occurred somewhere in the external serial busline SB, a signal at the terminal 16 indicating such line breakage is supplied to the base of the transistor 17 functioning as the resistance inserting means. The transistor 17 has its emitter grounded while having its collector connected to the external serial busline SB via the resistor RX₂ having the same resistance as the terminal resistor RX₁ (for example, 75 ohms). Thus, if the state of line breakage has been ascertained and the transistor 17 is turned on, the external serial busline SB is grounded via the resistor RX₂. That is, if line breakage should occur somewhere in the external serial busline so that the transmission signal becomes 5V, the resistor RX₂ is in circuit and functions as a terminal resistor and hence the voltage level of the transmission signal is restored to its normal level of 2V ± 0.5V. In this manner, the part of the external serial busline SB upstream of the point of breakage may be used normally despite the occurrence of the line breakage.

The signals from the terminals 14 to 16 may be transmitted to alarm alert means (not shown) indicating the abnormalities by, for example, vision or sound. In this manner, abnormalities occurring on the transmission line, such as breakage or shorting, may be promptly identified by an operator at a control centre. The normal operating state of the apparatus may also be confirmed by the signal at the terminal 15 indicating the normal operating state. The above-described arrangement for determining the unusual states may also be provided within the above-mentioned alarm display means.

With the present embodiment, since the units upstream of the point of line breakage may function normally despite line breakage of the external serial busline SB, it becomes possible to locate the point of line breakage. That is, since the part of the external serial busline as far as the remotest responding unit on the occasion of the aforementioned polling is not subject to line breakage, it may be determined that line breakage has occurred immediately downstream of such remotest responding unit.

Although the arrangement for determining abnormalities is provided in Figure 10 in all of the primary and secondary units, it is also possible to provide this arrangement in only one of such units.

With the above-described matrix switcher apparatus of the present embodiment, since the abnormalities on the transmission line between the transmission/reception circuits may be discriminated by the comparator 13, it is possible to determine the unusual operating states on the transmission line, such as line breakage or shorting, or the usual operating state. In addition, since the terminal resistor is added to the transmission line as a function of the results of discrimination of the abnormalities occurring on the transmission line, it is possible to cope with breakage of the external serial busline SB.

The secondary stations 21 to 24 and the primary station 10 of Figure 10 are constituted by the matrix switcher units and remote control units, as described hereinabove.

In this manner, with the matrix switcher apparatus of the present embodiment, by locating abnormalities on the transmission lines between the transmission/reception circuits on the basis of detection outputs of a signal level of a predetermined signal from the transmission signals transmitted over the external serial busline, abnormalities on the transmission lines, such as breakage or shorting, may be ascertained. On the other hand, by inserting a terminal resistance in the transmission line depending on the results of detection of the abnormalities occurring on the transmission line, it becomes possible to enable some normal communication even in the event of breakage of, for example, the control busline.

## Claims

1. Matrix switcher apparatus comprising a plurality of switcher units (MSU₁ to MSU₄) connected in matrix form, each switcher unit including a plurality of input terminals (TI₁, TI₂) and a plurality of output terminals (TO₁, TO₂), said apparatus comprising:
a plurality of controlling means (CNT) each provided within each of said switcher units and operable to control the turning on and off of crosspoint switches (X₁₁ to X₂₂) connected to said input terminals (TI₁, TI₂) and said output terminals (TO₁, TO₂);
a remote control unit (RCU₁, RCU₂) for outputting switching data;
a serial busline (SB) for transmitting said switching data; and
a plurality of transmission/reception means (TR) each provided within said switcher units and said remote control unit for controlling transmission of said switching data between said switcher units and the remote control unit, a first one of said transmission/reception means (TR) being set to a master station (MS) mode and the remaining ones of said transmission/reception means (TR) being set to a slave station (SS) mode, said first one of said transmission/reception means (TR) sequentially polling the remaining ones of said transmission/reception means (TR) for storage of switching data outputted from said transmission/reception means (TR) for collectively transmitting the stored switching data over said serial busline (SB), the remaining ones of said transmission/reception means (TR) receiving only relevant data from the switching data transmitted over said serial busline (SB) and transmitting the relevant data to said controlling means (CNT).

2. Apparatus according to claim 1, wherein said switching data are transmitted in the form of plural blocks (DPP), each of said blocks (DPP) including master/slave discriminating data (M/S) indicating the mode of said transmission/reception means (TR) outputting said block(s).

3. Apparatus according to claim 1 or claim 2, wherein said switching data are transmitted in the form of plural blocks (DPP) and wherein the last one of said blocks (DPP) including the last data of the switching data includes continuity discriminating data (P/F) indicating that the block is the last block.

4. Apparatus according to claim 1, claim 2 or claim 3, comprising:
a plurality of detection means (10₁ to 10ₘ, 20₁ to 20ₙ) each provided in each of said switcher units, said detection means being operable to detect the presence or absence of information signals supplied to said input terminals (TI₁, TI₂) and the presence or absence of information signals outputted from said output terminals (TO₁, TO₂); and
a plurality of discriminating means (31) each provided within each of said switcher units and operable to detect the presence or absence of errors in the switching states of said crosspoint switches (X₁₁ to X₂₂) based on said switching data and the results of detection by said detection means.

5. Apparatus according to claim 4, comprising a plurality of alarm means (40) each provided in each of said switcher units, said alarm means (40) producing alarms on detected error occurrence in the switching states of said crosspoint switches (X₁₁ to X₂₂) based on the results of discrimination by said discriminating means (31).

6. Apparatus according to any one of the preceding claims, comprising:
a plurality of input signal format detection means (SI₁, SI₂)each provided in each of said switcher units, said input signal format detection means detecting signal formats of external devices each connected to each of said input terminals (TI, TI₂);
a plurality of output signal format detection means (SO₁, SO₂) each provided in each of said switcher units, said output signal format detection means detecting signal formats of external devices each connected to each of said output terminals (TO₁, TO₂); and
discriminating means (CNT) provided in each of said switcher units and operable to supply, on the basis of the results of detection by said input signal format detection means and the results of detection by said output signal format detection means, switching inhibit signals to said controlling means to prevent corresponding ones of said crosspoint switches (X₁₁ to X₂₂) from being turned on when said results of detection by said input signal format detection means differ from the results of detection by said output signal format detection means.

7. Apparatus according to claim 6, wherein said discriminating means comprises alarm means producing alarms when said results of detection differ from each other.

8. Apparatus according to any one of the preceding claims, comprising:
level detection means (11, 12) for detecting the signal level of said serial busline (SB);
comparator means (13) for comparing the signal level detected by said level detection means (11, 12) and a reference level; and
alarm means (14, 15, 16) for issuing alarms, on the basis of the results of comparison by said comparator means (13), when said signal level differs from said reference level.

9. Apparatus according to any one of claims 1 to 7, comprising:
level detection means (11, 12) for detecting the signal level of said serial busline (SB);
comparator means (13) for comparing the signal level detected by said level detection means (11, 12) and a reference level; and
resistance inserting means (17) for inserting a terminal resistance (RX₂) to said serial busline (SB), on the basis of the results of comparison by said comparator means (13), when said signal level differs from said reference level.

10. Matrix switcher apparatus comprising a plurality of switcher units (MSU₁ to MSU₄) connected in matrix form, each switcher unit including a plurality of input terminals (TI, TI₂) and a plurality of output terminals (TO₁, TO₂), said apparatus comprising:
a plurality of controlling means (CNT) each provided within each of said switcher units and operable to control the turning on and off of crosspoint switches (X₁₁ to X₂₂) connected to said input terminals (TI₁, TI₂) and said output terminals (TO₁, TO₂);
a remote control unit (RCU₁, RCU₂) for outputting switching data;
a plurality of transmission/reception means (TR) each provided within said switcher units and said remote control unit for controlling transmission of said switching data between said switcher units and the remote control unit;
a serial busline (SB) connected to said transmission/reception means (TR); and
a plurality of mode setting means provided in said switcher units and said remote control unit for selectively setting the operating mode of said transmission/reception means (TR) to a master station (MS) mode or a slave station (SS) mode, a first one of said transmission/reception means (TR) set to said master station (MS) mode sequentially polling the remaining ones of said transmission/reception means (TR) set to said slave station (SS) mode for storing switching data outputted from said transmission/reception means (TR) for collectively outputting the stored switching data over said serial busline (SB), said remaining ones of said transmission/reception means (TR) set to said slave station (SS) mode receiving only relevant data from the switching data transmitted over said serial busline (SB) for supplying the received data to said controlling means (CNT).

## Patentansprüche

1. Matrixschaltervorrichtung aufweisend mehrere Schaltereinheiten (MSU₁ bis MSU₄), die in Matrixform verbunden sind, wobei jede Schaltereinheit mehrere Eingangsanschlüsse (TI₁, TI₂) und mehrere Ausgangsanschlüsse (TO₁, TO₂) aufweist, wobei die Vorrichtung aufweist:
mehrere Steuereinrichtungen (CNT), die jeweils in jeder der Schaltereinheiten vorgesehen sind und ausgebildet sind, das Ein- und Ausschalten von Kreuzpunktschaltern (X₁₁ bis X₂₂) zu steuern, die mit den Eingangsanschlüssen (TI₁, TI₂) und den Ausgangsanschlüssen (TO₁, TO₂) verbunden sind;
eine Fernsteuereinheit (RCU₁, RCU₂) zur Ausgabe von Schaltdaten;
eine serielle Busleitung (SB) zur Übertragung der Schaltdaten; und
mehrere Übertragungs/Empfangseinrichtungen (TR), die jeweils innerhalb der Schaltereinheiten und der Fernsteuereinheit vorgesehen sind zur Steuerung der Übertragung der Schaltdaten zwischen den Schaltereinheiten und der Fernsteuereinheit, wobei eine erste der Übertragungs/Empfangseinrichtungen (TR) in einem Masterstation(MS)-Modus und die verbleibenden der Übertragungs/Empfangseinrichtungen (TR) in einen Slavestation(SS)-Modus versetzt sind, wobei die erste der Übertragungs/Empfangseinrichtungen (TR) die verbleibenden der Übertragungs/Empfangseinrichtungen (TR) nacheinander zur Speicherung der von den Übertragungs/Empfangseinrichtungen (TR) ausgegebenen Daten zur kollektiven Übertragung der gespeicherten Schaltungsdaten über die serielle Busleitung (SB) auffordert, wobei die verbleibenden der Übertragungs/Empfangseinrichtungen (TR) nur relevante Daten von den über die serielle Busleitung (SB) übertragenen Schaltungsdaten empfangen und die relevanten Daten an die Steuereinrichtung (CNT) übertragen.

2. Vorrichtung gemäß Anspruch 1,
wobei die Schaltungsdaten in der Form mehrerer Blöcke (DPP) übertragen werden, wobei jeder der Blöcke (DPP) Master/Slave-Unterscheidungsdaten (M/S) enthält, die den Modus der Übertragungs/Empfangseinrichtung (TR), die den/die Block/Blöcke überträgt, angibt.

3. Vorrichtung gemäß Anspruch 1 oder 2,
wobei die Schaltungsdaten in der Form von mehreren Blöcken (DPP) übertragen werden und wobei der letzte der Blöcke (DPP), der die letzten Daten der Schaltungsdaten enthält, Kontinuitäts-Unterscheidungsdaten (P/F) enthält, die angeben, daß der Block der letzte Block ist.

4. Vorrichtung gemäß Anspruch 1, Anspruch 2 oder Anspruch 3, aufweisend:
mehrere Erfassungseinrichtungen (10₁ bis 10ₘ, 20₁ bis 20ₙ), die jeweils in jeder der Schaltereinheiten vorgesehen sind, wobei die Erfassungseinrichtungen ausgebildet sind, die Anwesenheit oder Abwesenheit von den Eingangsanschlüssen (TI₁, TI₂) zugeführten Informationssignalen und die Anwesenheit oder Abwesenheit von von den Ausgangsanschlüssen (TO₁, TO₂) ausgegebenen Informationssignalen zu erfassen; und
mehrere Unterscheidungseinrichtungen (31), die jeweils in jeder der Schaltereinheiten vorgesehen und ausgebildet sind, die Anwesenheit oder Abwesenheit von Fehlern in den Schalterzuständen der Kreuzpunktschalter (X₁₁ bis X₂₂) basierend auf den Schaltungsdaten und den Ergebnissen der Erfassung durch die Erfassungseinrichtung zu erfassen.

5. Vorrichtung gemäß Anspruch 4,
aufweisend mehrere Alarmgebereinrichtungen (40), die jeweils in jeder der Schaltereinheiten vorgesehen sind, wobei die Alarmgebereinrichtungen (40) Alarmzeichen bei einem erfaßten Auftreten eines Fehlers in den Schaltungszuständen der Kreuzpunktschalter (X₁₁ bis X₂₂) basierend auf den Ergebnissen der Unterscheidung durch die Unterscheidungseinrichtung (31) erzeugen.

6. Vorrichtung gemäß einem der vorangegangenen Ansprüche, aufweisend:
mehrere Eingangssignalformat-Erfassungseinrichtungen (SI₁, SI₂), die jeweils in jeder der Schaltereinheiten vorgesehen sind, wobei die Eingangssignalformat-Erfassungseinrichtungen Signalformate von externen Geräten erfassen, die jeweils mit dem jeweiligen der Eingangsanschlüsse (TI₁, T₂) verbunden sind;
mehrere Ausgangssignalformat-Erfassungseinrichtungen (SO₁, SO₂), die jeweils in jeder der Schaltereinheiten vorgesehen sind, wobei die Ausgangssignalformat-Erfassungseinrichtungen die Signalformate von externen Geräten erfassen, die jeweils mit den Ausgangsanschlüssen (TO₁, TO₂) verbunden sind; und
eine Unterscheidungseinrichtung (CNT), die in jeder der Schaltereinheiten vorgesehen und ausgebildet ist, auf Basis der Ergebnisse der Erfassung durch die Eingangssignalformat-Erfassungseinrichtung und der Ergebnisse der Erfassung durch die Ausgangssignalformat-Erfassungseinrichtung Schaltunterdrückungssignale an die Steuereinrichtung zu liefern, um zu verhindern, daß die entsprechenden der Kreuzpunktschalter (X₁₁ bis X₂₂) eingeschaltet werden, wenn die Ergebnisse der Erfassung durch die Eingangssignalformat-Erfassungseinrichtung sich von den Ergebnissen der Erfassung durch die Ausgangssignalformat-Erfassungseinrichtung unterscheiden.

7. Vorrichtung gemäß Anspruch 6,
wobei die Unterscheidungseinrichtung eine Alarmgebereinrichtung aufweist, die Alarmsignale erzeugt, wenn sich die Ergebnisse der Erfassung voneinander unterscheiden.

8. Vorrichtung gemäß einem der vorangegangenen Ansprüche, aufweisend:
eine Pegelerfassungseinrichtung (11, 12) zur Erfassung des Signalpegels der seriellen Busleitung (SB);
eine Vergleichseinrichtung (13) zum Vergleichen des durch die Pegelerfassungseinrichtung (11, 12) erfaßten Signalpegels mit einem Referenzpegel; und
eine Alarmgebereinrichtung (14, 15, 16) zur Ausgabe von Alarmsignalen auf Basis des Ergebnisses des Vergleichs durch die Vergleichseinrichtung (13), wenn der Signalpegel von dem Referenzpegel differiert.

9. Vorrichtung gemäß einem der Ansprüche 1 bis 7, aufweisend:
eine Pegelerfassungseinrichtung (11, 12) zur Erfassung des Signalpegels der seriellen Busleitung (SB);
eine Vergleichseinrichtung (13) zum Vergleichen des durch die Pegelerfassungseinrichtung (11, 12) erfaßten Signalpegels mit einem Referenzpegel; und
eine Widerstandseinfügungseinrichtung (17) zum Einfügen eines Anschlußwiderstandes (RX₂) in die serielle Busleitung (SB) auf Basis der Vergleichsergebnisse durch die Vergleichseinrichtung (13), wenn der Signalpegel von dem Referenzpegel differiert.

10. Matrixschaltervorrichtung aufweisend mehrere Schaltereinheiten (MSU₁ bis MSU₄), die in Matrixform verbunden sind, wobei jede Schaltereinheit mehrere Eingangsanschlüsse (TI₁, TI₂) und mehrere Ausgangsanschlüsse (TO₁, TO₂) aufweist, wobei die Vorrichtung aufweist:
mehrere Steuereinrichtungen (CNT), die jeweils in jeder der Schaltereinheiten vorgesehen sind und ausgebildet sind, das Ein- und Ausschalten von Kreuzpunktschaltern (X₁₁ bis X₂₂) zu steuern, die mit den Eingangsanschlüssen (TI₁, TI₂) und den Ausgangsanschlüssen (TO₁, TO₂) verbunden sind;
eine Fernsteuereinheit (RCU₁, RCU₂) zur Ausgabe von Schaltdaten;
mehrere Übertragungs/Empfangseinrichtungen (TR), die jeweils innerhalb der Schaltereinheiten und der Fernsteuereinheit zur Steuerung der Übertragung der Schaltdaten zwischen den Schaltereinheiten und der Fernsteuereinheit vorgesehen sind;
eine serielle Busleitung (SB), die mit den Übertragungs/Empfangseinrichtungen (TR) verbunden ist; und
mehrere Modus-Einstelleinrichtungen, die in den Schaltereinheiten und der Fernsteuereinheit zur selektiven Einstellung des Betriebsmodus der Übertragungs/Empfangseinrichtungen (TR) in einen Masterstation(MS)-Modus oder einen Slavestation(SS)-Modus vorgesehen sind, wobei eine erste der Übertragungs/Empfangseinrichtungen (TR) in einen Masterstation(MS)-Modus eingestellt ist, um nacheinander die verbleibenden der Übertragungs/Empfangseinrichtungen (TR), die in den Slavestation(SS)-Modus eingestellt sind, zur Speicherung von Schaltdaten aufzufordern, die von den Übertragungs/Empfangseinrichtungen (TR) zur kollektiven Ausgabe der gespeicherten Schaltdaten über die serielle Busleitung (SB) ausgegeben werden, wobei die verbleibenden der Übertragungs/Empfangseinrichtungen (TR), die in den Slavestation(SS)-Modus eingestellt sind nur relevante Daten von den Schaltdaten empfangen, die über die serielle Busleitung (SB) zur Lieferung der empfangenen Daten an die Steuereinrichtung (CNT) übertragen werden.

## Revendications

1. Appareil à matrice de commutation comprenant une pluralité d'unités de commutation (MSU₁ à MSU₄) connectées sous forme matricielle, chaque unité de commutation incluant une pluralité de bornes d'entrée (TI₁, TI₂) et une pluralité de bornes de sortie (TO₁, TO₂), ledit appareil comprenant :
une pluralité de moyens de commande (CNT) prévus chacun à l'intérieur de chacune desdites unités de commutation et pouvant fonctionner pour commander la mise en circuit et hors circuit de commutateurs de point de croisement (X₁₁ à X₂₂) connectés auxdites bornes d'entrée (TI₁, TI₂) et auxdites bornes de sortie (TO₁, TO₂) ;
une unité de commande à distance (RCU₁, RCU₂) pour sortir des données de commutation ;
une ligne de bus en série (SB) pour transmettre lesdites données de commutation ; et,
une pluralité de moyens d'émission/de réception (TR) prévus chacun à l'intérieur desdites unités de commutation et de ladite unité de commande à distance pour commander la transmission desdites données de commutation entre lesdites unités de commutation et l'unité de commande à distance, un premier desdits moyens d'émission/de réception (TR) étant mis dans un mode de station maîtresse (MS) et les autres desdits moyens d'émission/de réception (TR) étant mis dans un mode de station asservie (SS), ledit premier desdits moyens d'émission/de réception (TR) faisant appel séquentiellement aux autres desdits moyens d'émission/de réception (TR) pour le stockage de données de commutation sorties desdits moyens d'émission/de réception (TR) pour transmettre collectivement les données de commutation stockées sur ladite ligne de bus en série (SB), les autres desdits moyens d'émission/de réception (TR) ne recevant que des données appropriées parmi les données de commutation transmises sur ladite ligne de bus en série (SB) et transmettant les données appropriées auxdits moyens de commande (CNT).

2. Appareil selon la revendication 1, dans lequel lesdites données de commutation sont transmises sous la forme de plusieurs blocs (DPP), chacun desdits blocs (DPP) incluant des données de discrimination de maître/esclave (M/S) indiquant le mode desdits moyens d'émission/de réception (TR) sortant le(s)dit(s) bloc(s).

3. Appareil selon la revendication 1 ou la revendication 2, dans lequel lesdites données de commutation sont transmises sous la forme de plusieurs blocs (DPP) et dans lequel le dernier desdits blocs (DPP) incluant les dernières données des données de commutation comprend des données de discrimination de continuité (P/F) indiquant que le bloc est le dernier bloc.

4. Appareil selon la revendication 1, la revendication 2 ou la revendication 3, comprenant :
une pluralité de moyens de détection (10₁ à 10ₘ, 20₁ à 20ₙ) prévus chacun dans chacune desdites unités de commutation, lesdits moyens de détection pouvant être mis en fonctionnement pour détecter la présence ou l'absence de signaux d'information fournis auxdites bornes d'entrée (TI₁, TI₂) et la présence ou l'absence de signaux d'information sortis desdites bornes de sortie (TO₁, TO₂) ; et,
une pluralité de moyens de discrimination (31) prévus chacun à l'intérieur de chacune desdites unités de commutation et pouvant être mis en fonctionnement pour détecter la présence ou l'absence d'erreurs dans les états de commutation desdits commutateurs de point de croisement (X₁₁ à X₂₂) selon lesdites données de commutation et les résultats de détection par lesdits moyens de détection.

5. Appareil selon la revendication 4, comprenant une pluralité de moyens d'avertissement (4) prévus chacun dans chacune desdites unités de commutation, lesdits moyens d'avertissement (40) produisant des signaux d'avertissement à l'apparition d'erreurs détectées dans les états de commutation desdits commutateurs de point de croisement (X₁₁ à X₂₂) selon les résultats de discrimination par lesdits moyens de discrimination (31).

6. Appareil selon l'une quelconque des revendications précédentes, comprenant :
une pluralité de moyens de détection de format de signaux d'entrée (SI₁, SI₂) prévus chacun dans chacune desdites unités de commutation, lesdits moyens de détection de format de signaux d'entrée détectant des formats de signaux de dispositifs externes connectés chacun à chacune desdites bornes d'entrée (TI₁, TI₂) ;
une pluralité de moyens de détection de format de signaux de sortie (SO₁, SO₂) prévus chacun dans chacune desdites unités de commutation, lesdits moyens de détection de format de signaux de sortie détectant des formats de signaux de dispositifs externes connectés chacun à chacune desdites bornes de sortie (TO₁, TO₂) ; et,
des moyens de discrimination (CNT) prévus dans chacune desdites unités de commutation et pouvant être mis en fonctionnement pour fournir, selon les résultats de détection par lesdits moyens de détection de format de signaux d'entrée et les résultats de détection par lesdits moyens de détection de format de signaux de sortie, des signaux d'interdiction de commutation auxdits moyens de commande pour empêcher que ceux correspondants desdits commutateurs de point de croisement (X₁₁ à X₂₂) soient mis en circuit quand lesdits résultats de détection par lesdits moyens de détection de format de signaux d'entrée différent des résultats de détection par lesdits moyens de détection de format de signaux de sortie.

7. Appareil selon la revendication 6, dans lequel lesdits moyens de discrimination comprennent des moyens d'avertissement produisant des signaux d'avertissement quand lesdits résultats de détection diffèrent entre eux.

8. Appareil selon l'une quelconque des revendications précédentes, comprenant :
des moyens de détection de niveau (11, 12) pour détecter le niveau de signal de ladite ligne de bus en série (SB) ;
un moyen comparateur (13) pour comparer le niveau de signal détecté par lesdits moyens de détection de niveau (11, 12) et un niveau de référence ; et,
des moyens d'avertissement (14, 15, 16) pour émettre des signaux d'avertissement, selon les résultats de comparaison par ledit moyen comparateur (13), quand ledit niveau de signal diffère dudit niveau de référence.

9. Appareil selon l'une quelconque des revendications 1 à 7, comprenant :
des moyens de détection de niveau (11, 12) pour détecter le niveau de signal de ladite ligne de bus en série (SB) ;
un moyen comparateur (13) pour comparer le niveau de signal détecté par lesdits moyens de détection de niveau (11, 12) et un niveau de référence ; et,
un moyen d'insertion de résistance (17) pour insérer une résistance de borne (RX₂) sur ladite ligne de bus en série (SB), selon les résultats de comparaison par ledit moyen comparateur (13), quand ledit niveau de signal diffère dudit niveau de référence.

10. Appareil à matrice de commutation, comprenant une pluralité d'unités de commutation (MSU₁ à MSU₄) connectées sous forme matricielle, chaque unité de commutation incluant une pluralité de bornes d'entrée (TI₁, TI₂) et une pluralité de bornes de sortie (TO₁, TO₂), ledit appareil comprenant :
une pluralité de moyens de commande (CNT) prévus chacun à l'intérieur de chacune desdites unités de commutation et pouvant être mis en fonctionnement pour commander la mise en circuit et hors circuit de commutateurs de point de croisement (X₁₁ à X₂₂) connectés auxdites bornes d'entrée (TI₁, TI₂) et auxdites bornes de sortie (TO₁, TO₂) ;
une unité de commande à distance (RCU₁, RCU₂) pour sortir des données de commutation ;
une pluralité de moyens d'émission/de réception (TR) prévus chacun à l'intérieur desdites unités de commutation et de ladite unité de commande à distance pour commander la transmission desdites données de commutation entre lesdites unités de commutation et l'unité de commande à distance ;
une ligne de bus en série (SB) connectée auxdits moyens d'émission/de réception (TR) ; et,
une pluralité de moyens d'établissement de mode prévus dans lesdites unités de commutation et ladite unité de commande à distance pour établir sélectivement le mode de fonctionnement desdits moyens d'émission/de réception (TR) à un mode de station maîtresse (MS) ou à un mode de station asservie (SS), un premier desdits moyens d'émission/de réception (TR) mis dans ledit mode de station maîtresse (MS) faisant appel séquentiellement aux autres desdits moyens d'émission/de réception (TR) mis dans ledit mode de station asservie (SS) pour le stockage de données de commutation sorties desdits moyens d'émission/de réception (TR) pour sortir collectivement les données de commutation stockées sur ladite ligne de bus en série (SB), lesdits autres desdits moyens d'émission/de réception (TR) mis dans ledit mode de station asservie (SS) ne recevant que des données appropriées parmi les données de commutation transmises sur ladite ligne de bus en série (SB) pour fournir les données reçues auxdits moyens de commande (CNT).
